**Europäisches Patentamt**

**European Patent Office**

**Office européen des brevets**

(19)

(11) Publication number : **0 517 534 A1**

# (12) EUROPEAN PATENT APPLICATION

(21) Application number : **92305162.7**

(22) Date of filing : **05.06.92**

(51) Int. Cl.$^5$ : **H04L 12/46, H04L 12/22**

(30) Priority : **06.06.91 GB 9112230**

(43) Date of publication of application :
**09.12.92 Bulletin 92/50**

(84) Designated Contracting States :
**BE CH DE DK FR IT LI LU NL SE**

(71) Applicant : **PIRELLI GENERAL plc**
**40 Chancery Lane**
**London WC2A 1JH (GB)**

(72) Inventor : **Toy, Norman Victor**
**97 Oakcroft Avenue**
**Kirby Muxlow, Leicester, LE9 9DH (GB)**

(74) Representative : **Burke, Steven David et al**
**R.G.C. Jenkins & Co. 26 Caxton Street**
**London SW1H 0RJ (GB)**

(54) **LAN repeater.**

(57)    A repeater (4,6,8) for a local area network (2)
has a plurality of ports (22,24,26) and a memory
(50) which stores, for each port, a list of permit-
ted or prescribed addresses. The source or
destination address contained in each message
received at the port is compared with the res-
pective address list, and the port is isolated in
dependence upon whether or not a match is
found. In this way, for example, DTE's on a local
segment can be precluded from accessing
specified DTE's on other segments.

FIG. 2.

This invention relates to local area networks (LAN's), and is particularly concerned with repeaters which interconnect different cable sections of a local area network and re-broadcast signals received from each cable section.

The invention is particularly, but not exclusively, concerned with LAN's using a bus network topology, such as the well known Ethernet system, which meets the standard IEEE 802.3. In such networks, each data terminal equipment (DTE) may comprise for example a PC, a workstation or a mainframe computer, and the DTE's are all connected in parallel to a single data transmission cable. Data is sent from one DTE to another by means of message packets. The technique for accessing the cable and thus sending a message from one DTE to another is subject to a mechanism known as CSMA/CD. This stands for "Carrier-Sense, Multiple-Access, Collision-Detect". In other words, each DTE wishing to send a message to another DTE must first wait until no other message activity is on the cable (Carrier-Sense). If no other activity is sensed then the DTE commences transmission but "listens" to the signal on the cable to detect whether another DTE has also gone through the same sequence of actions at the same time (Multiple-Access). This will be apparent since the signal occurring on the cable will not be identical to that being transmitted by the DTE since a combination of signals from competing DTE's will produce a "collision" of voltages on the cable (Collision-Detect). If this situation is detected, both DTE's cease transmission and remove their signals from the cable. There is then defined a random time delay for which each DTE will wait before re-establishing the data signals onto the cable and re-trying transmission. Eventually, one DTE will successfully commence the transmission sequence and transfer the whole message.

For this mechanism to work successfully the total cable length allowed is limited to a specific value. This value is related to the speed at which signals travel along the specified cable type and the maximum time a DTE should wait before assuming that a "collision" has not occurred. Even before this theoretical maximum length is encountered there are experienced practical problems with the deterioration of signals such that reliable operation is impaired. It is therefore customary to introduce "repeaters" into the network whose sole purpose is to regenerate the signals without otherwise interfering with the CSMA/CD mechanism. A repeater is thus said to preserve a single "collision domain". Some available repeaters provide other useful services, such as the provision of multiple ports to allow separate segments of cable to radiate out from a common point whilst still preserving the "parallel" nature of the connections, automatic disconnection of cable segments which exhibit noise from malfunctioning DTE's which would otherwise flood the network with erroneous signals, and isolation of ports which have a cable connected but no DTE's attached and are therefore radiating spurious signals.

Since all DTE's are connected in parallel to the cable, then any DTE (if suitably commanded) can "eavesdrop" on data packets being passed between other DTE's regardless of their physical position in the network. This can be undesirable in some networks where sensitive data is passed over a common network. Furthermore, if the user of a DTE discovers the address of a DTE containing confidential data it is possible for that user to attempt access by trial and error until the access protection mechanism in the DTE is breached.

EP-A1-0 431 751 (available under Article 54(3)) discloses a multiport repeater which prevents messages which do not comply with stored access rules from being passed on to other cable segments. This is achieved by corrupting the message during retransmission. The port supplying the message may additionally be disabled. This technique has the disadvantage that the corrupted messages will be detected by a network controller and give a false impression of the performance of the system.

According to the present invention, there is provided a repeater for a local area network (LAN) which permits communication between terminals in the form of messages each containing at least one address identifying the source or the intended destination of the message, the repeater comprising a plurality of ports, a memory storing address data representing one or more predetermined addresses, and means for comparing the stored address data with addresses in messages received by said repeater and, in dependence on whether or not a match is found, for inhibiting communications in at least one direction using a said port by at least partially disabling said port following receipt of the address with which the stored address data is compared but before the end of receipt of data contained in said message.

In one of the preferred embodiments, each port of the repeater would be connected to a respective segment of the network, and the repeater would store, for each port, a respective list of addresses representing DTE's on other segments to which access is to be denied. Whenever a message is received at a port, the destination address in that message is compared with the respective list. If a match is found, the port is inhibited. This would at least involve preventing the retransmission of further signals received at that port, but would preferably involve complete isolation of the port so that messages in both directions are inhibited. The isolation would occur substantially immediately, before receipt of the data content of the message. The technique of isolating ports is known in the art for other purposes. While the port is in an isolated state, there are said to be two independent collision domains, one on each side of the port, until the port becomes de-isolated.

An advantage of this arrangement is that there is no need to apply any additional delay to the message in the repeater. The result will be that the illegal message will be truncated and the truncated portion re-transmitted to other segments of the network. However, the truncated segment will appear to the other DTE's like an interrupted message packet resulting from a collision detection of the type mentioned above. It will therefore not interfere with normal operation of the network.

Although this operation involves the comparison of the stored address lists with destination addresses, it would alternatively be possible to compare the lists with source addresses. In this way, it would be possible to ensure that selected DTE's are excluded from accessing other segments of the network.

The invention also extends to a local area network system including at least one repeater according to the invention.

An arrangement embodying the invention will now be described by way of example with reference to the accompanying drawings, in which:

Figure 1 schematically represents a LAN of the invention; and

Figure 2 is a schematic diagram of a repeater of the LAN.

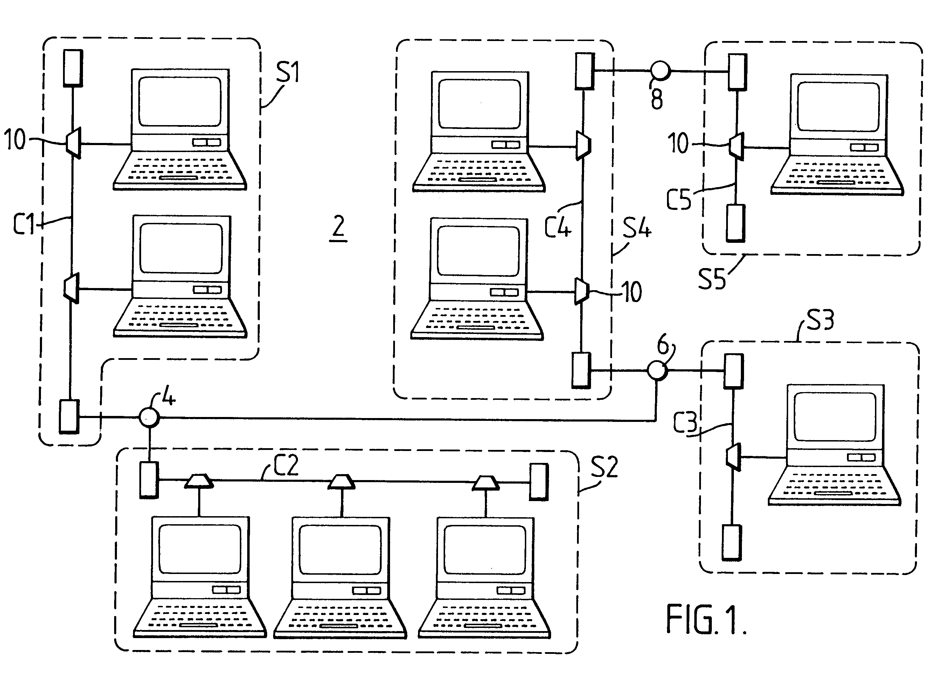

Referring to Figure 1, a LAN system generally designated by the reference number 2 comprises a plurality of segments S1 to S5. Each of the segments includes a respective length of network cable C1 to C5, which cables are interconnected by means of repeaters 4, 6 and 8. Each of the segments S1 to S5 includes one or more DTE's, which in the illustrated embodiment are PCs. Within each segment, the DTE's are connected to the respective cable via a connector box such as those shown at 10 in such a way that the DTE's in each segment are connected in parallel. The repeaters 4, 6 and 8 re-broadcast the signals on the cables and prevent data degradation. In normal use of the system, the repeaters so interconnect the cable segments that all the DTE's behave as though they were connected directly in parallel with each other to a single length of cable, except for slight delays introduced by the re-broadcasting function performed by the repeaters.

The illustrated embodiment is an example of an Ethernet system, and the features described so far are well known in the art.

In some circumstances, it may be desirable to restrict communications along the network, such as for example when particularly sensitive data is stored on one of the DTE's. By way of example, in the illustrated embodiment the segment S4 may be associated with a management department and include DTE's containing confidential personnel data to which access is to be inhibited to users outside that department.

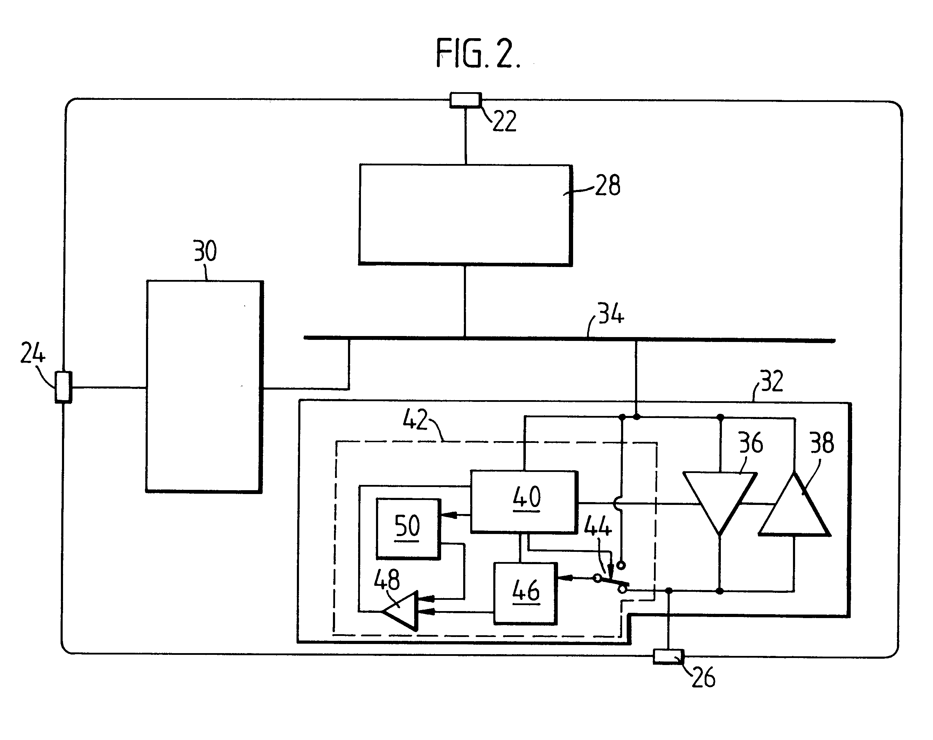

In the illustrated embodiment, the repeaters 4 and 6 have three ports, and the repeater 8 has two ports, although variations in the number of repeaters, the number of ports in each repeater, etc., are of course possible. Figure 2 shows in more detail an example of a three-port version of a repeater according to the present invention. Each of the ports 22, 24 and 26 which is intended to be connected to a respective cable segment is coupled to a respective port processing circuit, which circuits are shown at 28, 30 and 32. For the purposes of clarity, only the processing circuit 32 is shown in any detail, although the others are of the same structure. Each processing circuit is arranged to couple the signals at the respective port to an internal repeater bus 34, and also to couple the signals appearing on the repeater bus 34 to the respective port. This is achieved by a pair of buffer circuits 36 and 38 connected in anti-parallel between the input and output of the respective processing circuit. The two buffer circuits are controlled by a control circuit 40 of an address filter shown generally at 42.

The control circuit 40 is coupled to the internal bus 34 and behaves as another DTE in that it has a unique address and can receive and transmit messages on the network. The internal bus 34 and the port 26 are selectively coupled via a switch 44 to an address selector 46. This selects either the destination address or the source address in a received message under control of the control circuit 40. The selected address is compared by a comparator 48 with each of the addresses in a list stored in a memory 50 and the results of the comparison is delivered to the control circuit 40.

In one mode of operation, a network management station of the network, which may be one of the PC's shown in Figure 1, sends messages to the control circuit 40 containing addresses which the circuit 40 loads into the memory 50. Messages received at the port 26 are delivered to the address selector 46, to select the destination addresses which are then compared with the addresses in the memory 50. If a match is found, the control circuit 40 disables the buffers 36 and 38, thereby isolating the port 26.

The selector 46 could instead be caused by the control circuit 40 to select the source addresses. Furthermore, in another mode of operation of the circuit 40, the isolation carried out thereby is performed in response to failure to find a match with the addresses stored in the memory 50, instead of performing the isolation in response to finding a match.

It will be appreciated from the above that it is possible to set the address filter 42 so that the DTE's connected to the respective port will only be able to send messages to DTE's on other segments if those DTE's have addresses stored in the memory 50. Any messages to other DTE's which are not within the local segment containing the source DTE will be terminated by the filter operation. In another mode of operation, DTE's on the local segment are allowed to address all other DTE's except for those having addresses listed in the memory 50. If the address selector 46 is instead arranged to examine source addresses, then the filter can be operated so that only specific DTE's on the local segment, corresponding to the addresses listed in the memory 50, will be allowed to send messages to DTE's on other segments. On the other hand, the filter can be operated so that specific DTE's corresponding to the addresses in the memory 50 are denied access to DTE's on other segments.

It will be understood that, with the filter operating on locally-generated messages received at the respective port, the isolating operation will result in truncated messages appearing on the other segments connected to the repeater. The truncation will occur very quickly after the receipt of the address (source or destination) in the message on which the filter is operating. Preferably, truncation occurs within five bits, and more preferably within one or two bits, of the end of the respective address. In the IEEE standard mentioned above, a message packet comprises a preamble, the destination address, the source address, a type field, data and a frame check field. It will therefore be appreciated that termination of the message can be arranged to occur long before the complete set of data has been received, and indeed can occur before any data at all is received. This enables very secure operation. The truncated message packet appearing on the non-local segments will resemble the type of signal occurring as a result of message collision, and therefore would not be treated as abnormal. Other DTE's on the non-local segments can start to transmit after the truncated message. Since there are now two collision domains an attempt to send messages across the port will fail. However, IEEE 802.3 provides a connectionless service and always relies on an upper level of the communication protocol to provide a retry service which will guarantee message delivery. It is therefore advisable to arrange that the port is enabled again after a short period.

In an alternative arrangement, it would be possible to inhibit communications by disabling only one of the buffers (in particular the buffer 38 receiving data from the port which has delivered the unauthorised message), which is a technique known as partitioning. However, this would tend to generate collisions on the local segment involving subsequently-occurring messages from DTE's on the non-local segments, which would not detect the parts of the original message occurring after the inhibition operation was performed. These collisions would occur later than normal collisions, which would be detected and would be an undesirable consequence.

Following operation of the switch 44 by the control circuit 40, the address filter 42 can act on remotely-generated messages appearing on the internal bus 34, rather than those on the local segment connected to the respective port.

The control circuit 40 can be placed in either one of two enabling modes in response to messages received from the network management station. In a first mode, the buffers 36 and 38 are enabled immediately after the completion of the message containing the address which resulted in the isolation of the port. In a second mode, the control circuit 40 sends an alarm message to the network management station upon isolating the port, and enables the buffers 36,38 only after receiving an appropriate command from the network management station. In either mode, enabling should be arranged to occur only when no activity is present on both sides of the port. In the second mode, the control circuit can also send to the network management system the source address from the message which has caused the isolation operation so as to permit monitoring of the DTE's which are attempting unauthorised access. Additionally or alternatively, the destination address from the message can be transmitted to indicate the DTE's to which unauthorised access is being attempted.

Although Figure 2 shows blocks representing respective repeater components, in practice the functions preformed by these blocks would be likely to be achieved by software or firmware.

Figure 2 suggests that there is a respective control circuit 40 (identified by a respective address) for each of the ports, but in practice a common control circuit could be used for all the ports. Also, it is not essential that individual memory circuits 50 are provided for the respective ports, although it is preferred that the repeater memory as a whole should store separate address lists for the respective ports.

## Claims

1. A repeater for a local area network (LAN) (2) which permits communication between terminals in the form of messages each containing at least one address identifying the source or the intended destination of the message, the repeater (e.g. 4) comprising a plurality of ports (22,24,26), a memory (50) storing address data representing one or more predetermined addresses, and means (40,48) for comparing the stored address data with addresses in messages received by said repeater (4) and, in dependence on whether or not a match is found, for inhibiting communications in at least one direction using a said port (26) by at least partially disabling said port following receipt of the address with which the stored address data is compared but before the end of receipt of data contained in said message.

2. A repeater as claimed in claim 1, wherein the comparing means (40,48) is operable to isolate said port (26), and thus inhibit communications in each direction, in dependence on whether or not a match is found.

3. A repeater as claimed in claim 1 or 2, wherein the inhibition is arranged to occur before the receipt of any data contained in the message.

4. A repeater as claimed in any preceding claim, wherein the comparing means (40,48) is operable to compare the stored address data with addresses in messages received at said port (26).

5. A repeater as claimed in claim 4, including switch means (4) for selectively causing the stored address data to be compared with addresses in remotely-generated messages received via one or more other ports (22,24) of the repeater.

6. A repeater as claimed in any preceding claim, wherein the comparing means is operable to compare the stored address data with source addresses in received messages.

7. A repeater as claimed in any preceding claim, wherein the comparing means is operable to compare the stored address data with destination addresses in received messages.

8. A repeater as claimed in any preceding claim, wherein the memory stores a plurality of sets of address data, each representing one or more predetermined addresses for comparison with an address in each message received at a respective one of said ports.

9. A repeater as claimed in any preceding claim, the repeater having three or more ports.

10. A repeater as claimed in any preceding claim, wherein the repeater is operable to send a message to a network management station of the network in dependence on whether or not a match is found.

11. A repeater as claimed in claim 10, wherein the repeater is operable in response to a message from the network management station to enable said port.

12. A repeater as claimed in any preceding claim, the repeater being operable automatically to enable said port at the end of said message.

13. A repeater as claimed in claim 12 when dependent upon claim 10, the repeater being switchable between a first mode in which it automatically enables the port at the end of said message and a second mode in which it enables said port in response to a message from the network management station.

14. A local area network system having two or more terminals interconnected by cabling and at least one repeater as claimed in any preceding claim.

FIG.1.

FIG. 2.

European Patent
Office

**EUROPEAN SEARCH REPORT**

Application Number

EP    92 30 5162

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,P, X | EP-A-0 431 751 (BICC)<br><br>* the whole document * | 1-4,6,7, 9-14 | H04L12/46<br>H04L12/22 |
| A | | 5,8 | |
| A | GLOBECOM '89<br>vol. 1, November 1989, IEEE NEW YORK US<br>pages 185 - 190;<br>C. K. KWOK ET AL.: 'On Transparent Bridging of CSMA/CD Networks'<br>* paragraph 2 * | 1-14 | |
| | | | **TECHNICAL FIELDS SEARCHED (Int. Cl.5 )**<br><br>H04L |

The present search report has been drawn up for all claims

| Place of search | Date of completion of the search | Examiner |
|---|---|---|
| THE HAGUE | 20 AUGUST 1992 | MIKKELSEN C. |